# EUROPEAN PATENT SPECIFICATION

(11) **EP 4 547 618 B1**
(45) Date of publication and mention of the grant of the patent: **30.09.2026**
(21) Application number: 23737946.6
(22) Date of filing: 29.06.2023
(51) Int. Cl.: C04B 20/02, C04B 28/02

(54) **A METHOD AND INSTALLATION FOR RECYCLING FIBER CEMENT WASTE MATERIAL**
VERFAHREN UND ANLAGE ZUM RECYCLING VON FASERZEMENTABFALLMATERIALIEN
PROCÉDÉ ET INSTALLATION POUR LE RECYCLAGE DE DÉCHETS DE FIBROCIMENT

(30) Priority: 29.06.2022 EP 22182068
(43) Date of publication of application: 07.05.2025
(73) Proprietor: Etex Services NV, 1880 Kapelle-op-den-Bos (BE)
(72) Inventor: MAREELS, Joyce, 1840 Londerzeel (BE); WANTE, Steven, 9240 Zele (BE)
(74) Representative: Etex Services NV - Etex IPSC
(86) International application number: PCT/EP2023/067870
(87) International publication number: WO 2024/003277

(56) References cited:
- JP-A- 2002 273 258

## Description

### Field of the Invention

The present invention is related to the processing of fiber cement material, in particular the processing of fiber cement waste products for recycling purposes.

### State of the art

Fiber cement is an important building material. Whereas asbestos fibers were used in the past, these have been replaced by carbon-based fibers for well-documented health reasons. Cellulose fibers are a much-used type of carbon-based fibers applied in the fabrication of fiber cement products, for example in autoclave-cured fiber cement products. Other types of carbon-based fibers include polyvinyl alcohol (PVA) fibers and polypropylene (PP) fibers, which are commonly used in air-cured fiber cement. Polyethylene (PE) fibers may be also be used in combination with any of the above. Most fiber cement products have a density of at least 1.2 kg/dm³, and have been prepared as a series of thin layers that are laminated into a green sheet following by a curing process. Such a structure is for instance obtained by using the Hatschek manufacturing process. The resulting fiber cement products are characterized by high compressive strength
Waste fiber cement material is available in large quantities, not only from used and replaced products, but also and even primarily as a by-product from the production techniques of new products, such as the cutting of newly produced fiber cement panels.

Therefore, recycling of such waste fiber cement material has been investigated before. In order to be feasible for reuse, the waste material, typically in the form of plates or larger pieces, is to be crushed first and then to be pulverized. However, fiber cement is a composite material. To enable useful recycling, it is desired to remove at least part of the fibers in the fiber cement product. According to JP2002-273258A1, one could subject the material first to volume pulverization. As the organic fibers have little pulverizing action in the volume pulverizer, the fiber length is relatively maintained at several hundred µm. The fibers could be removed thereafter, by using a difference is specific gravity, particularly in an air-classifier. Therein, a separation is made between an air-flow in which fibers are dispersed and a powder with a significantly reduced fiber content.

The example given in the said patent specification for a fiber cement product, makes use of an air classifier, which uses an open circuit. In such an open circuit, material that is too coarse in comparison to the separation size of the air classifier, is removed from the operation as a side stream. Such an open circuit clearly reduces the yield of the separation process. It is thus not effective. The said patent specification provides another example for a calcium silicate board comprising 10% pulp, using a roller mill and an air classifier in a closed circuit. However, such a calcium silicate board has a low density of below 0.9 kg/dm³, a high porosity and is known to be cut easily; in fact it is not a fiber cement product, as it contains no cement or only as an additive in minor amounts, such as for instance 5% by weight.

JP2004-217482A1 discloses a method wherein the resulting powder has a particle size (median diameter) in the range of 10-35 µm. The waste material is therein treated in a primary pulverization step with a hammer mill, which is followed by a secondary crushing step with a roller mill. The material is then subjected to air classification, and fiber components are removed by a sieve after air classification. No further details are disclosed for the method.

The resulting powder is used for manufacture of a low-density product, with a density between 1.0 and 1.1 kg/dm³. Thereto, a slurry comprising cement, fly ash, silicone stone and short and long fiber pulp (i.e. cellulose) and 5% of the recycled powder was prepared into a sheet. The excavated sheet was pressure-molded at 3 MPa, and thereafter first pre-cured and then autoclave-cured.

However, low-density products are typically used for ceilings. They do not have the required performance for façade panels, flooring applications and/or roofing applications, for which medium- and high-density boards are used. The reported tensile strength is in the range of 4.5-5.3 MPa, which is well below the requirements for façade panels, flooring applications and/or roofing applications. It is furthermore not apparent from the data that the recycled material could be used for more demanding applications.

In fact, JP2006-23624A1 is a subsequent patent publication from the same inventors, which includes comments on the product quality of the recycled powder disclosed in JP2004-217482A1. It is stated in [0005] that the fiber component and the solid component are often in an entangled state in the pulverized product, and that it is difficult to separate them completely. This would lead to an apparently large particle size due to the protrusion of the organic fibers. As a consequence, the particle size of the pulverized product varies, and the desired performance is imparted to the newly made product including same pulverized product ([0006]). The disclosed solution to this product resides in subjecting the pulverized product to a heat treatment for burning and removing the organic fibers ([0016]). This solution evidently has other disadvantages, including use of energy, treatment of air including any removal products, as well as potential changes to the cement matrix due to the exposure to a high temperature, preferably in the range of 450 to 500°C. It is known that hardened (air-cured) cement looses hydratation water with increasing temperature. Calcium hydroxide for instance looses its hydratation water from 400°C onwards. Furthermore, the Calcium hydroxide and Calcium Silicate Hydrates (CSH) may degrade, leading to loss of strength. For air-cured fiber cement such CSH includes 2CaO.SiO2. For autoclave-cured fiber cement, the CSH for instance includes tobermorite.

JP2002 273258 describes a method for processing fiber cement waste material into cementitious powder with an organic fiber content of less than 2% by weight.

As a consequence, there is a need for an improved method of recycling fiber cement waste, wherein particularly fibers can be removed from the cementitious powder, and this not just in an experiment but on industrial scale. More particularly, the cementitious powder should be feasible of reuse into medium-density and high-density fiber cement products. It should furthermore be suitable for a feed that predominantly consists of high-density fiber cement material.

### Summary of the invention

It is therefore a first object of the invention to provide a method for processing fiber cement waste material into cementitious powder with a reduced fiber content relative to the waste material, that does not have the disadvantages of the prior art

It is a second object of the invention to provide an apparatus for processing fiber cement waste material into cementitious powder.

It is a further object of the invention to provide use of the apparatus for processing waste material.

The present technology furthermore relates to cementitious powder with a reduced fiber content and without entangled fibers without reduction or degradation of Calcium Silicate Hydrates in the cement.

The present technology also relates to use of said cementitious powder, for instance for fiber cement products or for concrete products.

According to a first aspect, the invention relates to a method for processing fiber cement waste materials into cementitious powder, wherein the cementitious powder preferably has a particle size distribution such that 5 at least 90 % by weight (d90) is smaller 100 µm, a median (d50) is in the range of 10- 40 µm, more preferably in the range of 15-35 µm, most preferably 20-30 µm, said method comprising the steps of:
supplying crushed material originating from fiber cement waste material to a micronizing apparatus, comprising a vertical roller mill in a milling chamber; means for generating an upward heated airflow through the milling chamber; an air classifier arranged above said vertical roller mill in said milling chamber, and an outlet downstream of said air classifier;
grinding the crushed material in the vertical roller mill to break open the crushed material and thereby reduce size of at least a portion of the crushed material without corresponding size reduction of the fibers embedded in said crushed material, therewith generating agglomerates of cementitious particles fibers,
removing material from the vertical roller mill and drying said agglomerates by means of the upwards heated air flow, wherein fibers get liberated from said cementitious particles during said upwards airflow and/or any subsequent impact within the milling chamber;
separating in the air classifier the cementitious particles into a fraction of larger particles and a fraction of smaller particles, the larger particles being re-supplied into the milling chamber to the roller mill, while a mixture of said smaller particles and liberated fibers is ejected through the outlet,
separating said ejected mixture to separate the fibers from the cementitious particles by sieving through a sieve, therewith obtaining said cementitious powder.
The inventors have obtained surprisingly good results for the process using a vertical roller mill in combination with a heated air flow through the milling chamber that removes agglomerates resulting from grinding, as well as any separate ground particles and fibers toward an air classifier at the top of the milling chamber. Thereafter, fibers may be separated out of the mixture.

In the grinding step in the vertical mill, the feed, being crushed material, is broken open, rather than being completely milled down. The fibers are not or not significantly milled down. This results in agglomerates of fibers and cementitious particles. Particularly, use is made of a grinding process that is based on rolling and thus grinding material by compression force instead of an impact-based milling, such as a ball-mill process.

The agglomerates of fibers and cementitious particles are generated, as the cementitious particles and fibers stick together. This sticking is understood by the inventors to be due to interactions between particles, fibers and any humidity within the material; in other words as adhesion between hydrophilic fibers and the cement particle surface. Fibers in fiber cement are typically hydrophilic fibers, such as cellulose fibers and polyvinyl alcohol (PVA) fibers. When the agglomerates are dried by means of a treatment with a heated airflow, the sticking decreases and particles may be liberated from the fibers and/or vice versa. Any impact, for instance to a wall of the chamber or during processing in the air classifier may facilitate such liberation.

Within the context of the present invention, the term 'agglomerates' is understood in line with its meaning in surface chemistry, where it is opposed to aggregates. Whereas aggregates are based on chemical bonds between the constituting elements that are strong, agglomerates are held together by means of weak physical interactions. The constituting elements are here cured cementitious particles, and fibers. The number of fibers per agglomerate will typically be limited, such as less than 10, and in a majority of the agglomerates being even less, such as at most five or even at most three or two. In case the number of fibers is large, such an agglomerate will typically not pass the air classifier but be recycled to the vertical roller mill for further grinding. It is believed that the agglomerates are typically of such that fibers may be partially exposed at an outside of an agglomerate. While the grinding process is designed to generate agglomerates, it is not excluded that it further generates individual cementitious particles, and/or some liberated fibers, with the former being more probable than the latter.

It is in the subsequent process steps of removal of the particles by means of the heated air flow and/or impact of the flowing particles to the air classifier and/or a wall of the milling chamber, that the full liberation of fibers from the cement particles is effected.

The size reduction of cement material is roughly in the order of 5-15 mm down to 2-100 µm, preferably with more than 90 wt% in the range of 5-80 µm or even 10-60 µm. The median (d50) of the resulting cementitious powder is suitably in the range of 10-60 µm, preferably in the range of 10-50 µm and even more preferably in the range of 10-40 µm, for instance 20-30 µm. The upper limit of the median is determined rather through the concentration of fibers and the average fiber length. When the average fiber length is being 500 µm, the risk of flowability issues increases significantly. The inventors believe that this increase in flowability issues is caused by entanglement of individual fibers, of which the likelihood increases with increasing fiber length. If the cementitious powder does not have sufficient flowability, there is a risk that cementitious powder may not be removed properly from a silo filled therewith. Furthermore, insufficient flowability is considered to hamper a uniform dispersion of the cementitious powder in a cement composition for the manufacture of fresh articles, such as fresh fiber cement products.

The reduction of the fiber length is from 0.8-2.0 mm back to 0.2-0.5 mm. It is believed that both the crushing apparatus, such as a hammer mill and the vertical roller mill contribute to this size reduction. As is apparent from the characterization in Example 3, the fiber length in the cementitious powder resulting from the milling and the sieving step is surprisingly uniform (i.e. has a low polydispersity).

In the air-classifier, the coarser particles will be rejected and drop down back to the vertical milling. Finer particles as well as liberated fibers will pass the air classifier. Hence, the air classifier does not provide a separation of fibers and cement material, but rather a separation between fine and coarse cement material. Furthermore, the air classifier may be of assistance to liberate the fibers from the ground cement material. It is observed, that the fibers have a length that may exceed the size limits of the air classifier, and hence may be considered as part of the coarser fraction. However, in view of their shape and elasticity, also the comparatively long fibers were found to pass the air classifier. It is furthermore observed that no or substantially no fibers are removed from the air classifier with the airflow.

Separation of liberated fibers and finer cement material is performed downstream of the air-classifier in the second separation step, which is a sieving step. It is observed that not all fibers are removed from the finer cement material in this second separation step. However, the removal of fibers is sufficient to reduce the fiber content, i.e. to an organic carbon content of less than 2% by weight. The organic carbon content excludes an inorganic carbon, such as carbon in the form of carbonate, especially calcium carbonate. The organic carbon content is furthermore calculated on the basis of the carbon only.

In one specific implementation the milling chamber was heated to a temperature in the range of 70-90°C. Herein, the air flow itself was brought to a higher temperature. That is found to provide heat for sufficient drying within the residence time of the agglomerates in the milling chamber. Evidently, if less heat is provided, there will be less drying, such that more agglomerates will remain stable and potentially be returned to the vertical roller mill.

In another advantageous embodiment, the vertical roller mill comprises a rotating horizontal grinding track and one or more rollers configured to rotate about stationary rotation axes so that the crushed material is ground between the grinding track and a lateral surface of the rotors. The mill may further comprise a rotating table. Preferably the lateral surface of the rollers s a conical surface. The roller is thus tapered and its axis may include an angle with the grinding track in the range of 0-30 degrees, for instance 10-20 degrees. The rollers are actively rotated about their respective rotation axes and pressed against the rotating table, while the crushed material is supplied to spaces between the rotors and the rotating grinding track, to thereby crack and further reduce the size of the crushed material.

In again a further embodiment, the air classifier is a gravitational air classifier. Herein, coarse particles are conveyed by gravity through a valve at the bottom of the air classifier, and fine material is conveyed by air to a fabric filter. The air classifier may have an internal chamber, from which coarser material is rejected by means of the centrifugal force into an annular gap. This would allow then to be flow down. However, under this force, further fibers may be liberated from the cementitious particles without falling back into the vertical mill and being milled down. The size of the coarser material to be rejected is for instance in the range of 100-200 µm, such as 130-170 µm, for instance 125 µm or 150 µm. This size may be set by means of a classificiation point.

In a further advantageous embodiment of the invention, the crushed material has a particle size (as defined by a median diameter) in the range of 2 mm to 10 cm, preferably in the range of 3 mm to 5 cm, such as in the range of 5 mm to 3 cm. In this manner, the particle size of the crushed material is such that the fibers remain predominantly within the individual pieces of the crushed material. Hence, the crushing does not reduce the length of the fibers more than necessary to reach appropriate feed for the vertical roller mill.

In one preferred implementation, the method further comprises the step of crushing waste material into crushed material prior to the communition and fiber separation. The in-situ crushing of waste material provides the benefit that some detection steps may be performed, so as to remove undesired or harmful elements. Additionally, this ensures that the crushed material has the preferred size as specified hereinabove. In an even further implementation, the step of crushing waste material comprises a first step to break down waste material into lumped material and a second step to break down said lumped material into crushed material. The first step may for instance be performed by means of a shredder. The second step may further instance be performed by means of a hammer mill, although other known milling techniques are not excluded. As used herein, lumped material is material that has a macroscopic size, for instance a diameter in the range of 5 to 25 cm, such as 10 to 15 cm. It will be understood that the exact size is not relevant here. However, the material should be appropriate as feed for the mill used in the second step.

In another preferred implementation, a detection step is performed on the crushed material for removal of harmful and/or undesired materials. Any detected harmful or undesired material may be removed. Known options for removal include valve and a gripper.

One option is the use of a magnetic detection step, which is deemed appropriate for removal of metals. A further and preferred option is an optical detection step, such as detection by means of a camera and subsequent identification of undesired and/or harmful materials. The camera may for instance be chosen to operate with visible light (400-750 nm) or with near infrared (NIR, 750-2000 nm). A combination of both is also feasible. In one specific implementation, the detection step and the detector are configured for detecting polymer ribbons. Such ribbons are in used for certain types of fiber cement such as corrugated sheets. It is deemed preferred to use a detection of NIR-spectroscopy, although other options are not excluded. In a further specific implementation, the detection step is configured for detection of asbestos materials. This may be performed by means of NIR spectroscopy.

Preferably, the detection and removal steps are implemented in an automatic manner, i.e. such that no action from an operator is needed. This is achieved, as known in the art, by a so-called vision steps that makes use of optical detection software. A light source for emission of radiation of a desired wavelength may also be needed, for instance by means of NIR detection.

In again a preferred embodiment, the separation step to remove fibers from the cementitious particles by means of sieving is performed with a mesh in the range of 50-200 micrometers, preferably 70-180 µm, more preferably 90-160 µm, for instance 100 µm, 125 µm or 150 µm. The mesh is an optimum between maximum yield on cementitious particles and minimum content of fibers. When using a mesh of 150µm, the fiber content may be reduced to 2% by weight of organic carbon. When using a mesh of 80-100 µm, the fiber content may be further reduced to 1% by weight of organic carbon. The exact carbon content on the resulting cementitious particles will depend on several parameters, including the content of fibers in the waste material, the type of fibers and the size of the crushed material, and the type of sieve. A variety of sieve types is known in the art, including dry sieves, air-jet sieves, sieves supported by means of ultrasonic vibration. A choice is made based on effectiveness of separation and capacity.

In a further implementation, the sieving step may be performed with a plurality of sieves arranged in series, wherein the mesh of a second sieve is reduced as compared to the first sieve. A first sieve for instance has a mesh of 150 µm and a second sieve has mesh of 100 µm. However, other meshes may be chosen and the number of sieves may be larger than two. The one or more intermediate fractions that pass the first sieve but do not pass the last sieve, may then be further processed, for instance by means of a different separation technique, such as a classifier. Such fractions could also be fed back into the milling chamber for renewed separation.

It is one of the further advantages of the present invention that the fibers that are separated in the sieving step may also be reused. One useful way of reusing the fibers is to add those to fiber cement and apply a concomitant reduction of the fresh fiber material in the fiber cement slurry.

Preferably, the resulting cementitious powder has a particle size distribution such that at least 90 % by weight (d90) is smaller 100 µm. Furthermore, the cementitious powder advantageously has a median (d50) in the range of 10-60 µm, preferably 10-40 µm, more preferably in the range of 15-35 µm, more preferably 20-30 µm. For the avoidance of doubt, the particle size distribution is determined with laser diffraction, using equipment supplied by Malvern Pananalytical and known as Mastersizer^{™} 3000. The particle size distribution is dependent on the settings of the grinding step in the vertical roller mill. A median in the range of 10-40 µm is particularly suitable, for reuse in cement and/or fibre cement manufacture, as it corresponds to the median size of cement and quartz. Furthermore, this results therein that fibers in the cementitious powder have a limited length, for instance an average length of less than 500 µm, and preferably in the range of 300-450 µm, as defined by the arithmetic average length.

Such as cementitious powder with such particle size distribution has been found to be useful for reuse in fiber cement, as the particle size distribution roughly corresponds to those of other ingredients of a fiber cement product, such as cement and silica. However, the resulting cementitious powder is also advantageous for use in concrete and other building material, as will be discussed in more detail hereinafter. One of the advantages of the cementitious powder is its flow ability, due to the limited amount of fibers and particularly the absence of larger fibers, such as fibers with a length of more than 700µm or even more than 600µm or even more than 500µm. This flow ability allows to store the cementitious powder in a silo container and facilitates that the powder may flow out from the bottom without clogging.

The method of the invention has moreover the advantage that the throughput time for the comminution step and the fiber removal is short, for instance when comparing to communition by means of ball mill. This has the further advantage that different batches of fiber cement waste material may be processed by the method of the invention without significant mixing. This is an important advantage, as it allows generating cementitious powders with limited fiber content in batches from a single source, such as a specific fiber cement product and even a fiber cement product in a specific color. As a consequence, when using production waste, a resulting batch of cementitious powder will have a cement composition that is known. Such a batch may then be reused for the production of a single product, typically the same product as from which the waste originates.

The method of the invention has been furthermore feasible for treatment of fiber cement waste on an industrial scale, with feed of waste material in the range of 500-2000 kg/hour, preferably 1000-1800 kg/hour. Higher feed flows are not excluded and may evidently be achieved by addition of equipment.
According to a second aspect, the invention relates to an installation comprising - an apparatus for crushing waste fiber cement material in which fibers are embedded in a cured cement matrix into crushed material;
- a micronizing apparatus (10) comprising (1) a vertical roller mill in a milling chamber, which is configured for using said crushed material as feed and for generating agglomerates of cementitious particles and fibers; (2) means for generating an upward heated airflow through the milling chamber for transporting said agglomerates of fibers and said cementitious particles upwards and for drying said agglomerates; (3) an air classifier arranged above said vertical roller mill in said milling chamber for separating off a coarser fraction of said cementitious particles and returning them into the milling chamber towards said vertical roller mill, and an outlet downstream of said air classifier, through which a finer fraction of said cementitious particles and liberated fibers are to pass;
- a sieve downstream of said outlet for separating said liberated fibers from said cementitious particles.

This installation is suitable and configured for performing the process of the invention as hereinabove described. The installation is more specifically described by means of the following figure description. Any features described in relation to the process hereinabove or with reference to the figure, are deemed to be specified in combination with the installation as well.

In accordance with one beneficial embodiment, the vertical roller mill comprises a rotating horizontal grinding track and one or more rollers configured to rotate about stationary rotation axes while being pressed against the grinding track, so that the crushed material is ground between the grinding track and a lateral surface of the rollers. The mill may further comprise a rotating table. Preferably the lateral surface of the rollers s a conical surface. The roller is thus tapered and its axis may include an angle with the grinding track in the range of 0-30 degrees, for instance 10-20 degrees. The rollers are actively rotated about their respective rotation axes and pressed against the rotating table, while the crushed material is supplied to spaces between the rotors and the rotating grinding track, to thereby crack and further reduce the size of the crushed material.

In again a further embodiment, the air classifier is a gravitational air classifier. Herein, coarse particles are conveyed by gravity through a valve at the bottom of the air classifier, and fine material is conveyed by air to a fabric filter. The air classifier may have an internal chamber, from which coarser material is rejected by means of the centrifugal force into an annular gap. This would allow then to be flow down. However, under this force, further fibers may be liberated from the cementitious particles without falling back into the vertical mill and being milled down. The size of the coarser material to be rejected is for instance in the range of 100-200 µm, such as 130-170 µm, for instance 150 µm.

In according with another advantageous embodiment, material is transported between the specific apparatus in the installation by means of a conveyer belt. The outlet of the micronizing apparatus is preferably coupled to the sieve by means of a channel in which air is used as a carrier for the particles and the fibers. Alternatively, use may be made of a conveyer belt. While referring in the present application to a micronizing apparatus, it is understood that the apparatus actually reduces the size of the fiber cement material in the range of 1-100 micrometer, with a median preferably in the range of 20-30 micrometer.

In again a further embodiment, the apparatus for crushing waste material comprises a first stage for breaking down waste material into lumped material and a second stage for breaking down said lumped material into crushed material. The first stage is for instance embodied as a shredder. The second stage is for instance embodied as a hammer mill.

Preferably, the sieve is chosen to be an ultrasonic sieve. This was found beneficial for correct operation. More preferably the sieve may be an apparatus comprising a plurality of individual sieves with subsequent reduction of mesh size.

In another embodiment, the installation further comprises one or more detector for detection of harmful and/or undesired materials. These materials comprise conventional undesired materials such as metal and plastic parts, as well as asbestos, which may be present in waste material originating from demolition of buildings and/or renovation of buildings. It is desired to prevent that the resulting cementitious powder will be contaminated with any asbestos fibers.

'Metals may be detected with a magnetic detector. A preferred option of such detector is an optical detector, such as detection by means of a camera and subsequent identification of undesired and/or harmful materials by automatic image recognition. The camera may for instance be chosen to operate with visible light (400-750 nm) or with near infrared (NIR, 750-2000 nm). A combination of both is also feasible. In one specific implementation, the detection step and the detector are configured for detecting polymer ribbons. Such ribbons are in used for certain types of fiber cement such as corrugated sheets. It is deemed preferred to use a detection of NIR-spectroscopy, although other options are not excluded. In a further specific implementation, the detector is configured for detection of asbestos materials. This may be performed by means of NIR spectroscopy.

Preferably, the one or more detection steps are implemented in an automatic manner, i.e. such that no action from an operator is needed. This is achieved, as known in the art, by a so-called vision steps that makes use of optical detection software. A light source for emission of radiation of a desired wavelength may also be needed, for instance by means of NIR detection.

Furthermore, it is preferred that any removal means, such as a valve or a gripper are present, which removal means are driven via an output signal of the detector. In this manner, the harmful and/or undesired waste will be removed in an automatic manner, without need of action from an operator.

In a preferred embodiment, the installation is configured for processing not merely fiber cement waste but also for processing concrete, mortar, cement, but particularly concrete. Such a combination is beneficial for economical operation of the installation, but also to achieve optimized outputs. In order to process both of fiber cement waste and concrete, the micronizing apparatus is provided with a first output for aggregates and a second output for sand and clay and mixtures thereof. A displacement means is present so as to displace said ground sand and clay from the vertical roller mill towards the second output. Embodiments of the displacement means include a screw a piston, a scooper. A screw is deemed a preferred option. In a further implementation, the screw or piston may be arranged within a tube so as to minimize that matter falls out of the screw. In operation, concrete will be ground into aggregates, into sand, clay and/or mixtures thereof, and into cementitious particles. The aggregates will be removed via the first output, that is preferably arranged downwards from the vertical roller mill. The clay, sand and/or mixtures therewith will be removed via the second output, supported thereto by the displacement means. Cementitious particles may be removed via the air classifier.

This implementation of the micronizing apparatus is deemed technically beneficial in that the pre-treatment, such as the apparatus for crushing waste material, and any detectors additionally and optionally present, can be the same for the different waste sources. This keeps the complexity of the entire installation low. A further benefit hereof, is that the separate removal of aggregates, clay and/or sand reduces the average number of grinding cycles needed for the grinding of the concrete material into particles of any desired size. A further advantage of the installation is that different feed materials may be kept separate, in view of the short operation time of the vertical roller mill.

In a further implementation hereof, the installation is further provided with an optical detector for automatic detection of a feed of the micronizing apparatus. Based on the output of such detector, settings of the micronizing apparatus may be switched from a first state for processing concrete to a second state for processing fiber cement waste and/or vice versa. Evidently, such a switch of the settings of the micronizing apparatus may also be effected otherwise, such as through an operator, through a software program in which the operation planning is loaded etc. In the first state, the displacement means will operate. The grinding pressure will be comparatively high, i.e. appropriate for grinding concrete. In the second state, the displacement means may be turned off and the grinding pressure will be comparatively low. Optionally, settings of the air classifier and flow rate of heated air may be changed between the first state and the second state.

In again a further implementation, the sieve may be provided with a bypass. Upon switching from the second state to the first state, the bypass may be activated, so that cementitious particles from concrete do not pass the sieve. This is deemed beneficial for operation efficiency and for reducing wear and damage of the sieve.

In again a further implementation, a sifter apparatus may be arranged downstream of the second output for separating sand and clay. In an even further implementation, a sieving apparatus comprising a first and a second sieve arranged in series may be present downstream of the second output. The first sieve is suitably a coarse sieve, such as with a mesh in the range of 0.5 to 4 mm, for instance 1 to 2.5 mm. The second sieve may be a fine sieve, such as with a mesh in the range of 100-300 µm. In this manner, the output stream out of the second output may be separated into a coarse fraction to be aggregate, an intermediate fraction comprising sand and/or clay and a fine fraction. The coarse fraction may be led to the first output or be recycled into the micronizing apparatus. The fine fraction may be added to the cementitious particles. The intermediate fraction may be further processed to separate sand and clay, preferably with the sifting apparatus.

The installation of the preferred embodiment is versatile as being able to process a variety of waste materials. Furthermore, it enables an efficient processing into a plurality of output streams, each of which may be valuable and useful in one or more production processes in the cement and fiber cement manufacturing. These output streams comprise a cementitious powder provided with a low amount of fibers, especially less than 2% by weight based on organic carbon content, wherein the fibers are relatively short; a fibre stream, that predominantly comprises fibres and is retained on the sieve; a sand output stream, a clay output stream, aggregate output stream, and a separate cementitious powder from concrete. Furthermore, it is feasible to keep different feeds separated, so that production waste from a grey, black, red or white colored fiber cement material will result in grey, black, red and white output streams respectively. In order to lower the organic carbon content, it is furthermore feasible to mix the cementitious powder from concrete with the cementitious powder from fiber cement waste.
According to a third aspect, use of the installation according to the invention is provided, especially the use of the preferred embodiment thereof, wherein a first batch and a second batch of waste material are processed one after the other, wherein the first batch is concrete waste material, and the second batch is fiber cement waste material. More particularly herein, said use comprises the step of changing the settings of the installation from a first state to a second state in between of the processing of the first batch and the second batch. Any of the further implementations discussed hereinabove also apply to this third aspect.
According to a fourth aspect, a method of processing waste is provided, comprising the steps of:
Providing an installation according to the invention, preferably in accordance with the preferred embodiment thereof;
Processing a first batch of waste material therein, wherein said first batch is a concrete material;
Thereafter, processing a second batch of waste material therein, wherein said second batch is a fiber cement waste material.
In accordance with the invention the first and second batch will lead to separate output streams that may be recovered separately, and this be reused separately, as explained hereinabove. In accordance with a preferred implementation, the method further comprises a step of changing settings in the installation from a first state to a second state in between of the processing of the first batch and the processing of the second batch. Further implementations discussed hereinabove are also applicable to this fourth aspect of the invention.
A cementitious powder resulting from the use of the method of the invention generally comprises fibers in an amount of at most 2 % by weight as defined by organic carbon content, wherein the powder has a particle size distribution such that at least 90 % by weight (d90) is smaller 100 µm, a median (d50) is in the range of 10-40 µm, preferably in the range of 15-35 µm, more preferably 20-30 µm, and wherein said cementitious powder is a cured powder comprising calcium hydroxide and/or calcium silicate hydrates (CSH) in an amount of at least 5% by weight. Furthermore, said organic fibers have an arithmetic average length (L(n)) in the range of 0.25 mm to 0.50 mm, preferably in the range of 0.30 mm to 0.45 mm. The said content of both calcium hydroxide and calcium silicate hydrates will be hereinafter referred to as CSH content. The CSH content is more preferably at least 10% by weight, by further preference at least 15% by weight. The CSH content may even be at least 20% by weight. In fact, the CSH content is related to the CSH content in the fiber cement waste material. Due to the removal of fibers, the CSH content will even be higher in the cementitious powder than in the fiber cement waste material. The CSH content may be determined by means of X-ray diffraction analysis (XRDA).

Generally, fiber cement is cured in two different manners, namely air-cured and autoclave cured. As a consequence, the CSH content is distinct. In cementitious powder obtained from air-cured waste material, the CSH content is primarily in the form of calcium hydroxide, typically crystalline, and CSH-gel. As known to a skilled person, a CSH-gel is a material comprising crystallites which however behaves as a gel. In cementitious powder obtained from autoclave-cured waste material, the CSH content will be primarily in the form of tobermorite.

Hence, in one embodiment of the invention, the cementitious powder is an air-cured powder and comprises calcium hydroxide and CSH gel an as the primary CSH. In another embodiment of the invention, the cementitious powder is an autoclave-cured powder and comprises tobermorite.

In a further embodiment of the invention, the cementitious powder comprises fibers in an amount of at most 1 % by weight as defined by organic carbon content. In another embodiment, the cementitious powder comprises fibers in an amount of between 0.5 and 2% by weight, preferably between 1.0 and 2.0% by weight as defined by organic carbon content. Beyond the total content, the fiber length of the fibers is deemed highly relevant for appropriate flowability.

It has been observed by the inventors in tests leading to the present invention that the cementitious powder of the invention has appropriate flowability. As such it may be stored in a silo and be disposed thereof without a risk of clogging or without significant visco-elastic and rather unpredictable flow behaviour.

The cementitious powder turns out suitable for reuse for fiber cement. Tests have shown that the normalized strength increases in comparison to fiber cement of a corresponding composition without recycled fiber cement. In comparison to fiber cement that was comminuted in line with the process of the invention, but from which the fibers were not removed by sieving, the invention leads to products with a higher Young's modulus, and elastic behaviour up to a higher level.

Preferred manufacturing methods for fiber cement products include Magnani process, extrusion process, flow-on process and the Hatschek process. The Hatschek process is most preferred. More preferably, the cementitious powder is used for the production of fiber cement products, such as fiber cement sheets, with a medium-density or a high density. A medium density fiber cement product is specified as a product with a density in the range of 1.2-1.5 g/cm³. A high density product has a density of at least 1.5 g/cm³, typically 1.5-2.0 g/cm³.

The cementitious powder further turns out suitable for use in the production of concrete. Herein, the CSH-content may contribute to additional strength. Furthermore, due to the removal of a significant portion of the fibers, the water demand decreases when reusing this powder for concrete manufacturing.

The cementitious powder is suitably used in an amount of at least 7 weight%, for instance 10-20 weight% such as the 15 weight% of the illustrated examples. It is however not excluded that the cementitious powder is used in larger amounts for instance from above 20-50 weight%.

### Brief description of the figures

These and other aspects of the method, the installation of the invention and the resulting powder will be further elucidated with reference to the Figure and the Examples. It is observed for sake of completeness that any preferred embodiment or implementation discussed hereinabove and/or specified in one or more of the dependent claims is applicable to all aspects of the invention, even when not explicitly specified so for sake of brevity. Herein,

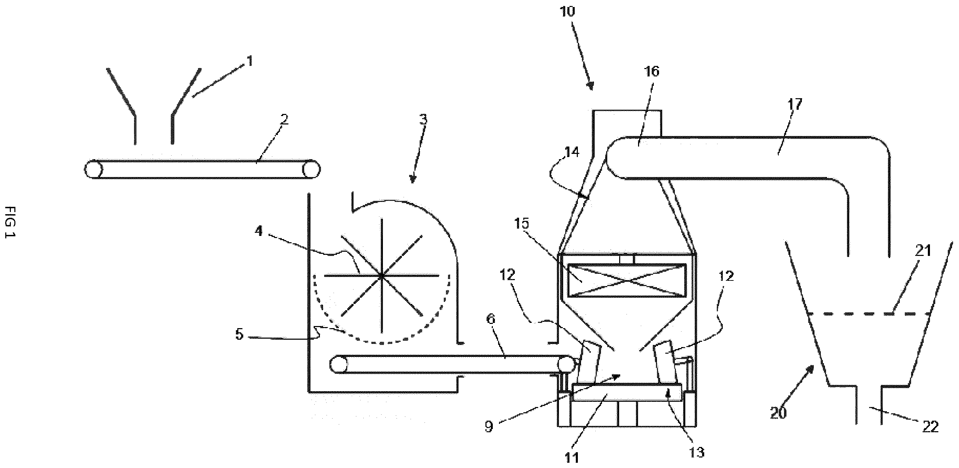

Figure 1 is a conceptual illustration of the various stages of the method according to an embodiment of the invention. The drawing also provides a schematic image of the main components of an installation according to embodiments of the invention.

### Detailed description of preferred embodiments of the invention

The steps of the method and the components of the installation of the invention will be described hereafter in more detail, including possible alternatives included in the protection scope and preferred ranges for a number of parameters. None of the stated details however defines the protection scope unless they are stated also in the independent claims.

The step of crushing raw fiber cement pieces into crushed material granules may be performed in two stages depending on the size of the raw material pieces. In most cases, these pieces will be large to the extent that a shredding stage is required to reduce the material to pieces whose largest dimension is about a few centimetres to 20 cm, hence the term 'centimetre-sized', or lumped material. A shredder installation as known in the art may be used for this purpose.

With reference to Figure 1, a supply of such lumped material is loaded into a hopper 1 or any other equivalent supply means. These pieces may be produced by a shredder installation (not shown) and supplied continuously or in batches to the hopper 1, from which they are transported on a first conveyor belt 2 to a hammer mill 3, configured to crush the lumped material into crush material of about 3 mm to 5 cm in diameter. Preferably the crushed material is smaller than about 10 mm in diameter. The term 'diameter' is used for indicating the size of the material even though the material pieces are not necessarily spherical in the geometrical sense when regarded on a microscopic scale. On a macroscopic scale however, the material pieces resemble a sphere sufficiently closely so that the diameter can be determined with an accuracy in the order of millimetres (for example, a piece of 5mm in diameter can be distinguished from a piece of 8 mm in diameter). It is preferred that the minimum size is not too small, so as to avoid that fibers would be exposed and/or milled down significantly before entering into the micronizing apparatus.

The hammer mill 3 may be any type of apparatus known in the art and suitable for crushing the lumped material pieces of waste fiber cement material into crushed material of the above-stated size. As illustrated in the drawing, the hammer mill 3 may comprise rotating hammer arms 4 and a sieve 5 that allows granules to pass through the sieve depending on their size. The hammer mill 3 is represented in a very simplified way, but its functioning is well known to the skilled person and need therefore not be described here in detail.

The pieces of the lumped material are still large enough to contain fibers embedded in a solid cement matrix, i.e. the fibers have not been separated from the cement at this stage.

From the hammer mill 3, the crushed material is transported by a second conveyor belt 6 to a micronizing apparatus 10. As shown in the drawing, this apparatus is of a particular type comprising a vertical roller mill in milling chamber 9 and an air classifier 14. The air classifier is arranged at a top of the milling chamber 9. It may include a separate chamber in which a separate is achieved by means of centrifugal forces. The shown vertical roller mill comprises a horizontally placed rotatable table 11 and a plurality of rollers 12 positioned so that a lateral surface of the rollers faces a grinding track 13 on the table 11. Preferably the lateral surface of the rollers 12 is a conical surface as shown in the drawing. The rollers 12 are actively rotated about their respective rotation axes and pressed against the rotating table 11, while the material are supplied to the spaces between the rollers 12 and the rotating grinding track 13, to thereby further crush the granules into smaller particles. Mounted above the rotors is an air classifier 14. In the illustrated embodiment, the air classifier 14 comprises a ventilator 15 and separation blades (not shown in detail). Not shown are air inlets at a bottom side of the milling chamber 9 through which air is pushed into the milling chamber to generate an upwards air flow. An outlet duct 17 is coupled to the outlet 16.

In the grinding portion of the vertical roller mill 10, the crushed material is ground between the rollers 12 and the grinding track 13 so that cementitious particles are formed. These particles may be 'micrometer sized'. The term 'micrometre sized' refers to the fact that these particles can be regarded as spheres on a microscopic scale with an accuracy in the order of micrometres, i.e. particles of diameter 20 µm are distinguishable from particles of diameter 25µm, 30µm or 40µm.

When these particles have diameters as small as 100 µm or less, they separate from the fibers, the majority of which have a length of about 800 to 2000 µm when embedded in the cement matrix. The size reduction of the particles is more profound than the reduction of the fiber length. It is understood that grinding in the vertical roller mill results in the formation of agglomerates of fibers and cementitious particles, i.e. material held together by means of capillary forces and/or other physical attraction.

A stream of the ground material is then lifted up out of the grinding area by the upward air flow and passes through the blades of the air classifier 14. During said lifting up, the ground material is dried. Due to said drying, said capillary forces and other physical bonding between fibers and particles will diminish. Hence, the ground material, i.e. said agglomerates, may fall apart. It is not excluded that interaction with the air classifier helps to achieve such separation.

The classifier is configured to allow only the separate fibers and lighter, finer particles to pass through the blades while coarser particles fall back to the grinding area. Said finer particles largely correspond to the fraction of particles having diameters of about 100 µm or less, i.e. the particles which are essentially free of embedded fibers. The larger particles are grinded again until they too are broken up into smaller particles that separate from the fibers. The mixture of fibers and particles passing through the outlet 16 and into the outlet tube 17 is therefore a mixture that is formed for the most part of unbroken fibers and micrometre-sized cementitious particles.

The sieving step takes place in a sieve 20 comprising a mesh 21 with openings designed to retain the fibers and allow the cementitious particles of diameter 100 µm or less to pass through the mesh and fall through an exit duct 22 from where the particles can be collected as the end product of the method. The mesh openings may for example be circular or equivalent, having a diameter in the order of 60 µm to 200 µm. According to further embodiments, the mesh diameter is in the range between 50µm and 150µm. According to a specific embodiment, the mesh diameter is about 100µm. The sieve 20 may be any type of sieve capable of performing the sieving step as described above. It could for example be a tumbling sieve. It may further be an ultrasonic sieve.

The fact that a majority of the fibers have not been broken up in the grinding area of the roller/classifier mill 10 enables the use of a sieve having the above-identified mesh openings which would not be able to retain a sufficient amount of fiber material if the majority of the fibers is broken up. This is believed to be a key contributor to the ability of the method and installation of the invention to reach superior results in terms of the fiber content in the final product collected in the outlet duct 22 of the sieve 20.

Said final product is a cementitious powder formed of particles having diameters of about 100 µm or less and with a fiber concentration of less than 2wt%, as defined by means of the organic carbon content. According to a first embodiment, the fiber concentration is between 1 and 1.9wt%, or between 1.2 and 1.9wt% or between 1.2 and 1.8wt% or between 1.3 and 1.7wt% or less than 1.5wt% or less than 1.4wt% (all as defined by the organic carbon content). According to a second embodiment, the fiber concentration is reduced to less than 1.4 wt%, more specifically in the range of 0.5-1.4 wt%, for instance 0.5-1.2 wt% or even 0.5-1.0 wt% as defined by the organic carbon content. Determination of organic carbon content is achieved by removal of any inorganic carbon by means of treatment with a sufficiently strong acid, such as phosphoric acid. Thereafter the sample is dried, oxidized and combusted, wherein the flow of CO2 is measured using a non-dispersive infrared detection cell.

The low fiber content enables the use of the powder as a resource for producing new cement or fiber cement products, in other words it enables the full recycling of the original waste products.

According to preferred embodiments, the cementitious particles obtained in the vertical mill are dried before or during their transport to the classifier 14, by heating the mill 10. This may be done by heating the upward air flow that transports the particles towards the classifier 14. According to a preferred embodiment, the mill is heated to a temperature between 70°C and 90°C. This may be realized by heating the air flow to a temperature of about 200°C.

Besides the temperature in the milling chamber 9, the optimization of a number of other parameters has been proven to be beneficial in terms of minimizing the fiber content and obtaining suitably sized particles in the end product. These parameters include the mechanical pressure exerted on the rollers, the supply rate of the millimetre-sized granules into the roller/classifier mill 10, and the air flow velocity in the mill 10.

The method of the invention may be performed as a continuous process, wherein a continuous supply of waste products undergoes the various steps consecutively. This mode is illustrated in Figure 1. Alternatively, the method may be performed in batch mode, wherein a batch of waste products is processed according to each method step, with the end product of each step being transported as a batch of material to the next step.

The invention is equally related to an installation suitable for performing the method of the invention. Such an installation at least comprises a roller/classifier mill 10 of the type described above, and a sieve 20 of any type suitable for separating the fibers from the micrometre-sized cement particles.

In the embodiment shown in Figure 1, the installation further comprises a hammer mill 3 or any equivalent tool capable of performing the same reduction of lumped material pieces of fiber cement waste material to crushed material.

The transport of products from one component to another need not be realized by conveyor belts as shown, but could be done by any other suitable transport means. The installation could additionally include a shredder placed upstream of the hammer mill 3.

According to an embodiment of the method, a colour separation step is added upstream of the micronizing apparatus, i.e. the colour separation is performed on the crushed material. The colour separation step may include a separation tool known as such, for example a tool using a camera system. A corresponding embodiment of the installation of the invention includes said colour separation tool between the hammer mill 3 or its equivalent and the micronizing apparatus 10.

### Example 1

Cementitious powders obtained with the method of the invention have been characterized. Table 1 shows test data obtained with waste material for autoclave-cured fiber cement products. The waste material was cutting waste generated during production of autoclave-cured fiber cement products commercialized by Eternit NV under the trade name tectiva^{™}. The material was treated by means of the micronizing apparatus as described with reference to Figure 1 hereinabove. The crushed material had a particle size below 5 mm. The material was treated with a vertical roller mill to a size of less than 100 µm. For sake of experiment, samples were taken without sieving, with a sieve of 100 µm mesh and with a sieve of 150 µm mesh. The sieve was an air jet sieve without use of ultrasonic system. Organic carbon content and bulk density were measured using standard method. The particle size distribution was measured using laser diffraction with a Malvern Mastersizer 3000 apparatus.

**Table 1**

| | | Before sieving | After sieving using a 150µm sieve | After sieving using a 100µm sieve |
|---|---|---|---|---|
| Cₘ org (m%) | | 3.03 | 2.01 | 1.29 |
| Loose Bulk density (g/dm³) | | 516 | 544 | 567 |
| PSDA | D90 (µm) | 93.3 | 63.0 | 47.1 |
| | D75 (µm) | 40.2 | 33.9 | 29.2 |
| | D50 (µm) | 19.0 | 16.9 | 15.2 |
| | D25 (µm) | 7.1 | 6.7 | 6.1 |
| | D10 (µm) | 2.1 | 2.0 | 1.8 |

It is apparent from the data in this table that the sieving has a significant impact on the organic carbon content. Moreover, the sieve with a mesh of 100 µm results in a significantly lower organic carbon content than that with the sieve of 150 µm.
It is furthermore visible that the resulting particle size distribution is concentrated in the range between 2 and 63 µm (D10 and D90 limits). In the shown example, the median (D50) is between 15 and 20 micrometers. In other examples wherein the crushed material had a somewhat larger size and another vertical roller mill was used, a distribution was obtained, with a D10 of 2.4 µm, a D50 of 24 µm and a D75 between 55 and 60 µm and a D90 in the range of 110-140 µm, using a sieve of 150 µm.

### Example 2

Table 2 shows test results for air-cured cementitious powder. The fiber cement waste material was cutting waste from a fiber cement panel commercialized under the name Natura by Eternit NV. Sieving was performed with a sieve with a mesh of 150 µm.

**Table 2**

| | | Before sieving | After sieving using a 150µm sieve |
|---|---|---|---|
| Cₘ org (m%) | | 2.05 | 1.30 |
| PSDA | D90 (µm) | 181.0 | 93.5 |
| | D75 (µm) | 86.2 | 52.2 |
| | D50 (µm) | 35.6 | 21.7 |
| | D25 (µm) | 10.5 | 7.0 |
| | D10 (µm) | 3.1 | 2.2 |

The same trends as perceived for the autoclave-cured material are visible in this table as well. The organic carbon content strongly reduces by sieving, and the particle size distribution ranges from 2 µm (D10) to a 93 µm (D90), thus somewhat below 100 µm. The median is at 22 µm.

### Example 3

Test were performed to determine the average fiber length in samples after sieving. Herein, the material sieving through a 150µm sieve was used. This material comprising both fibers and inorganic powder was treated in a Resch Vibratory Sieve Shaker during 5 minutes. In the apparatus, sieves of 150 µm, 100 µm and 75 µm were used. On each sieve, a fibre-rich layer was generated on top of the inorganic powder. Thereafter, the fibre-rich layers were removed from the inorganic powder and were combined into one fiber sample. The removed fiber sample still comprises inorganic powder. This contamination is however sufficiently small so that it does not hamper or disturb operation of the measurement apparatus. It was observed that the fibre-rich layer was thickest on the 150 µm sieve and thinnest on the 75 µm sieve.

The average fiber length was thereafter determined for the separated fibres by means of a Valmet FS5 apparatus, which is a fiber image analyzer for automated fiber measurements. This apparatus comprises a camera using UHD (ultra-high density) image resolution, which is also marketed as 4K resolution having a resolution of 4096 x 2160 pixels. The fiber length is measured by the apparatus in accordance with the ISO 16065-2 standard, hence using unpolarized light.

The measured fiber length can be specified in different ways. A distinction is to be made between the arithmetic average length of fibre L(n), as can be obtained by optical microscopy, and the length weight average fiber length L(i), as often used in the wood pulp industry. Herein: $L \left(n\right) = \sum \left(ni*li\right) / \sum \left(ni\right)$ $L \left(i\right) = \sum \left(\left[li*ni\right]*li\right) / \sum \left[li*ni\right]$

The ratio of the two different average fiber length (L(i)/L(n) is the polydispersity, and a measure of the broadness of the length distribution.
The average fiber length was determined for the cementitious powders obtained after sieving through a 150µm sieve in accordance with Example 1 and Example 2 (Samples 1 and 2 respectively). It was furthermore determined for another cementitious powder obtained from autoclave-cured production waste (Sample 3) and for a reference sample. This reference sample was a fresh cellulose mixture for use in an autoclave-curable fiber cement composition.
Results are shown in Table 3

**Table 3**

| Sample | Curing technology | L(n) (mm) | L(i) (mm) | L(i)/L(n) |
|---|---|---|---|---|
| 1 | Autoclave-cured | 0.33 | 0.38 | 1.15 |
| 2 | Air-cured | 0.40 | 0.46 | 1.15 |
| 3 | Autoclave-cured | 0.33 | 0.38 | 1.15 |
| Ref | None | 0.88 | 1.54 | 1.75 |

The material of sample 3 was sieved over a 150µm sieve, a 100µm sieve and a 75µm sieve. Results thereof are shown in Table 4

**Table 4**

| Sample | Sieve size | L(n) (mm) | L(i) (mm) | L(i)/L(n) |
|---|---|---|---|---|
| 3(1) | 75 µm | 0.28 | 0.30 | 1.07 |
| 3(2) | 100 µm | 0.37 | 0.40 | 1.08 |
| 3(3) | 150 µm | 0.51 | 0.56 | 1.10 |

From the results in Table 3 it can be derived that the fibers in the cementitious powder have an arithmetic average length L(n) in the range of 0.30 mm to 0.45 mm, a length weight average length L(i) in the range of 0.35 mm to 0.50 mm, and a polydispersity L(i)/L(n) in the range of 1.10-1.20. It is apparent that the average fiber length is well above the 150 µm sieving.

In comparison to the fresh fibers, the average length is clearly much shorter. In fact, taking account thereof that approximately one third of the fiber weight is removed and that the fiber length is reduced to 30-50%, such as 35-40% (0.33/0.88 = 0.375), the overall number of fibers in the cementitious powder per unit of mass will be larger than the number of fibers in the waste material (or the fresh material).

Furthermore, the polydispersity is reduced in comparison to a sample of fresh cellulose fibers. The low polydispersity is an indicator that the fibers have not been pulverized. Moreover, this low polydispersity is an indicator that the cementitious powder is useful for reuse into a variety of cementitious products such as fiber cement products, concrete, mortars and as in cement material. Due to the comparatively short length of the fibres, the cementitious powder is well dispersible. This is important, so that a fiber cement composition may comprise a sufficiently high amounf of cementitious powder, such as for instance at least 15%. As apparent from Example 4, a fiber cement product made in a Hatschek process with a composition comprising 15% by weight of such cementitious powder (with reduced amount of cement and silica compared to a reference) has higher IMOR and dMOR compared to a reference. It furthermore has increased E-modulus compared to the sample comprising cementitious powder from waste fiber cement material that has not been sieved.

### Example 4

Further tests were performed using the cementitious powder as characterized in Table 1. This material was added into a slurry for manufacturing fiber cement. The slurry composition was in accordance with the tectiva plate, with the exception that the amount of Portland cement and silica were reduced and 15% of the cementitious powder was added. The other ingredients were kept the same. The ingredients are shown in Table 5. The indicated amounts are based on dry weight. The test was performed with a composition without any recycling material, with a composition that was merely milled and with a composition that was both milled and sieved, using a 150 µm mesh sieve.

**Table 5 - compositions**

| | Reference | Without sieving | With sieving (150µm) |
|---|---|---|---|
| Cement (m%) | 33.8 | 26.3 | 26.3 |
| Silica (m%) | 35.4 | 27.9 | 27.9 |
| Recycled material (m%) | 0 | 15.0 | 15.0 |
| Cellulose fibers (m%) | 7.6 | 7.6 | 7.6 |
| Other mineral ingredients (m%) | 19.5 | 19.5 | 19.5 |
| Pigment (iron oxide) (m%) | 3.6 | 3.6 | 3.6 |

The slurry was used to manufacture fiber cement sheets using the Hatschek process, using a pilot line (MiniHatschek). The resulting panels had 20 films with a total thickness of 8 mm. They were pressed with a pressure of 230 kg/m² during 10 minutes. Precuring was performed at room temperature overnight. Subsequently, the panels were cured in an autoclave equipment at 170°C during 12 hours.
The resulting panels were thereafter tested to identify mechanical properties as well as chemical composition, i.e. the organic content and the amount of tobermorite.

**Table 6- test results, *determined under air-dry conditions, after drying to 40 °C 3 days, m% is mass percentage based on dry weight of the composition.**

| | Reference | Without sieving | With sieving (150µm) |
|---|---|---|---|
| C_{organic} (m%) | 2.80 | 3.31 | 3.17 |
| E-modulus (MPa)* | 16.5.10³ | 12.6.10³ | 15.1.10³ |
| dLOP (mm)* | 0.82 | 0.76 | 0.95 |
| SLOP (MPa)* | 25.6 | 20.4 | 25.5 |
| dMOR (mm)* | 1.14 | 1.33 | 1.25 |
| SMOR (MPa)* | 31.6 | 29.8 | 30.0 |
| iMOR (J/m²)* | 556 | 601 | 588 |
| Density (g/cm³)* | 1.60 | 1.50 | 1.50 |
| Moisture content (%)* | 3.45 | 2.12 | 2.08 |
| MOR/d²* | 12.36 | 13.30 | 13.33 |
| Tobermorite content (m%) | 17.5 | 24.6 | 25.7 |

The test results show that the organic carbon content increases relative to the fresh product. However, the content is lower for the sieved sample than for the sample without sieving. The total organic carbon content is higher than 2%, in view of the addition of fresh cellulose fibers.
The density of the product reduces due to the addition of the recycled cementitious powder. It has to be taken into account, however, that the amount of fresh cement in the samples with recycled powder is lower. Since the density of cement is higher than that of recycled cementitious powder (which contains around one third cement), this is not a surprise.
The tobermorite content turns out to increase significantly, for 17% up to about 25%. This is clearly an addition of the recycled fiber cement. The increase is more than expected based on the addition of 15% cementitious powder. It is believed that the presence of tobermorite in the cementitious powder may act as nucleating agent for the generation of tobermorite during the autoclave curing.
The shown mechanical properties were determined under air-dry conditions. The SLOP is herein the strength value at the limit of proportionality between the strain and the material expansion. Above this value, deformation will be irreversible, therewith damaging the material. The SMOR is the flexural strength determined as the modulus of rupture. The dLOP and the dMOR define the bending at the conditions of SLOP and SMOR. The iMOR is the fracture energy. The MOR/d² is the normalized flexural strength, wherein the SMOR is divided by the square of the density.
It is apparent from Table 6, that the removal of fibers brings the elastic properties (i.e. the elastic modulus and the SLOP) of the product to levels corresponding to the fresh product without any recycled material. This is a beneficial result from the removal of fibers. The dMOR and the iMOR increase relative to fresh material, and the humidity content decreases. The SMOR value decreases slightly (a few percent). However, the normalized flexural strength increases, due to the lower density.

## Claims

1. A method for processing fiber cement waste material into cementitious powder, wherein the cementitious powder preferably has a particle size distribution such that at least 90 % by weight (d90) is smaller 100 µm, a median (d50) is in the range of 10-40 µm, more preferably in the range of 15-35 µm, most preferably 20-30 µm, said method comprising the steps of:
- supplying crushed material originating from fiber cement waste material to a micronizing apparatus (10) comprising:
- a vertical roller mill in a milling chamber;
- means for generating an upward heated airflow through the milling chamber;
- an air classifier arranged above said vertical roller mill in said milling chamber, and
- an outlet downstream of said air classifier;
- grinding the crushed material in the vertical roller mill to break open the crushed material, thereby reduce size of at least a portion of the crushed material without corresponding size reduction of the fibers embedded in said crushed material, therewith providing agglomerates of fibers and cementitious particles,
- removing material from the vertical roller mill and drying said agglomerates of fiber and cementitious particles by means of the upwards heated air flow, wherein fibers and/or cementitious particles get liberated from said agglomerates during said upwards airflow and/or any subsequent impact within the milling chamber;
- separating in the air classifier (14) the cementitious particles into a fraction of larger particles and a fraction of smaller particles, the larger particles being re-supplied into the milling chamber to the vertical roller mill, while a mixture of said smaller particles and liberated fibers is ejected through the outlet (16),
- separating said ejected mixture to separate at least part of the liberated fibers from the cementitious particles by means of sieving through a sieve, therewith obtaining said cementitious powder.

2. The method as claimed in claim 1, wherein said grinding step is performed by compression of the crushed material.

3. The method as claimed in claim 1 or 2, wherein the air classifier is set to have a classification point in the range of 75 to 125 µm, preferably 90 to 110 µm, and wherein the vertical roller mill is set to have a milling size in the range of 75 to 125 µm.

4. The method as claimed in any of the claims 1 to 2, wherein said separation of said ejected mixture is performed by sieving with a sieve with a mesh of at most 150 micrometer, preferably with a mesh of at most 125 micrometer, and furthermore preferably with a mesh of at least 50 micrometer, more preferably at least 75 micrometer.

5. The method according to any of the preceding claims, wherein the milling chamber is preferably heated to a temperature between 70°C and 90°C by means of said heated air flow.

6. The method according to any of the preceding claims, wherein said crushed material is provided out of fiber cement waste material by means of a first size reduction step and a second size reduction step, wherein said first size reduction step results in lumped material and said second size reduction step breaks down said lumped material into crushed material, wherein preferably the first size reduction step is performed by shredding and/or wherein preferably the second size reduction step is performed in a hammer mill, and further comprising a sorting step in between of the first and the second size reduction step, wherein said sorting step is configured to remove material distinct from fiber cement, for instance a polymer ribbon, and wherein said sorting step preferably comprises a detection step using near infrared spectroscopy.

7. The method as claimed in any of the preceding claims, wherein fiber cement waste material is processed which has a density of at least 1200 kg/m3 as measured according to EN12467.

8. The method as claimed in any of the preceding claims, wherein fiber cement waste material is processed that comprises an air-cured cement material with at least 60wt% cement or an autoclave-cured cement obtained from autoclave-curing a composition comprising silica and at least 25wt% cement.

9. An installation for processing waste fiber cement material, comprising:
- an apparatus for crushing waste fiber cement material in which fibers are embedded in a cured cement matrix into crushed material;
- a micronizing apparatus (10) comprising:
(i) a vertical roller mill in a milling chamber, which is configured for using said crushed material as feed and generating agglomerates of cementitious particles and fibers from said crushed material;
(ii) means for generating an upward heated airflow through the milling chamber, wherein said heated airflow is configured for transporting said agglomerates, fibers and said cementitious particles upwards and for drying said agglomerates;
(iii) an air classifier arranged above said vertical roller mill in said milling chamber for separating off a coarser fraction of said cementitious particles and returning them into the milling chamber towards said vertical roller mill, and an outlet downstream of said air classifier, through which a finer fraction of said cementitious particles and liberated fibers are to pass;
- a sieve downstream of said outlet for separating said liberated fibers from said cementitious particles.

10. The installation as claimed in claim 9, wherein said vertical roller mill comprises a rotating horizontal grinding track (13), one or more rollers (12) configured to rotate about stationary rotation axes while being pressed against the grinding track, so that the crushed material is ground between the grinding track (13) and a lateral surface of the rollers (12),

11. The installation according to claim 9 or 10, wherein the sieve (20) is configured to separate the fibers from the particles of said mixture by using a mesh (21) with openings configured to allow the passage of a majority of the particles while withholding a majority of the fibers, wherein preferably the mesh (21) has openings whose diameter is between 60 µm and 200 µm or between 50 µm and 150 µm.

12. The installation according to claims 9-11, wherein the means for generating air flow comprise air inlets at a bottom side of the milling chamber, to create said upwards air flow.

13. The installation according to any of the claims 9-12, wherein the micronizing apparatus comprises a first output and a second output, and further comprises a displacement means for displacement of solid material from the vertical roller mill to the second output, wherein preferably the first output is arranged at a lower level than the second output and at a lower level than the vertical roller mill, and is configured for removal of aggregate.

14. The installation according to claim 13, wherein the micronizing apparatus is configured to have a first state and a second state, in which first state settings of the vertical roller mill are different from those in the second state, and in which first state the vertical roller mill is configured for grinding concrete or crushed material thereof and in which second state the vertical roller mill is configured for grinding crushed material from fiber cement waste into agglomerates of fibers and cementitious particles.

15. Use of the installation according to any of the claims 13-14 for the separate processing of a first batch and a second batch of waste material, wherein the first batch is a concrete waste material and the second material is a fiber cement waste material.

## Patentansprüche

1. Verfahren zur Verarbeitung von Faserzementabfällen zu zementhaltigem Pulver, wobei das zementhaltige Pulver vorzugsweise eine Partikelgrößenverteilung aufweist, bei der mindestens 90 Gew.-% (d90) kleiner als 100 µm ist, der Median (d50) im Bereich von 10-40 µm, besonders bevorzugt im Bereich von 15-35 µm und am meisten bevorzugt im Bereich von 20-30 µm liegt, welches Verfahren die folgenden Schritte umfasst:
- Zuführung von zerkleinertem Material aus Faserzementabfällen zu einer Mikronisierungsvorrichtung (10), die umfasst:
- eine Vertikalwalzenmühle in einer Mahlkammer;
- eine Einrichtung zur Erzeugung eines nach oben gerichteten, erwärmten Luftstroms durch die Mahlkammer;
- einen Windsichter, der oberhalb der Vertikalwalzenmühle in der Mahlkammer angeordnet ist; und
- einen Auslass stromabwärts des Windsichters,
- Mahlung des zerkleinerten Materials in der Vertikalwalzenmühle, um es aufzubrechen und so die Korngröße zumindest eines Teils des zerkleinerten Materials zu reduzieren, ohne die darin eingebetteten Fasern entsprechend zu verkleinern, wodurch Agglomerate aus Fasern und Zementpartikeln entstehen.
- Entnahme des Materials aus der Vertikalwalzenmühle und Trocknung der Faser- und Zementpartikelagglomerate mittels des nach oben gerichteten Heißluftstroms, wobei sich Fasern und/oder Zementpartikel während des Heißluftstroms und/oder durch nachfolgende Stöße innerhalb der Mahlkammer von den Agglomeraten lösen,
- Trennung der Zementpartikel im Windsichter (14) in größere und kleinere Partikel, wobei die größeren Partikel der Mahlkammer der Vertikalwalzenmühle wieder zugeführt werden, während ein Gemisch aus kleineren Partikeln und freigesetzten Fasern durch den Auslass (16) ausgestoßen wird,
- Trennung des ausgestoßene Gemisches durch Sieben, um zumindest einen Teil der freigesetzten Fasern von den Zementpartikeln abzutrennen, wodurch das Zementpulver bekommen wird.

2. Verfahren nach Anspruch 1, wobei der Mahlschritt durch Kompression des zerkleinerten Materials erfolgt.

3. Verfahren nach Anspruch 1 oder 2, wobei der Windsichter auf einen Klassierpunkt im Bereich von 75 bis 125 µm, vorzugsweise 90 bis 110 µm, eingestellt ist und die Vertikalwalzenmühle auf eine Mahlgröße im Bereich von 75 bis 125 µm eingestellt ist.

4. Verfahren nach einem der Ansprüche 1 oder 2, wobei die Trennung des ausgestoßenen Gemisches durch Sieben mit einem Sieb mit einer Maschenweite von höchstens 150 Mikrometern, vorzugsweise mit einer Maschenweite von höchstens 125 Mikrometern erfolgt und ferner bevorzugt mit einer Maschenweite von mindestens 50 Mikrometern, besonders bevorzugt mit einer Maschenweite von mindestens 75 Mikrometern erfolgt.

5. Verfahren nach einem der vorhergehenden Ansprüche, wobei die Mahlkammer vorzugsweise mit Hilfe des Heißluftstroms auf eine Temperatur zwischen 70 °C und 90 °C erhitzt wird.

6. Verfahren nach einem der vorhergehenden Ansprüche, wobei das zerkleinerte Material aus Faserzementabfällen mittels eines ersten und eines zweiten Zerkleinerungsschritts bereitgestellt wird, wobei der erste Zerkleinerungsschritt zu klumpigem Material führt und der zweite Zerkleinerungsschritt dieses klumpige Material in zerkleinertes Material zerkleinert, wobei der erste Zerkleinerungsschritt vorzugsweise durch Schreddern durchgeführt wird und/oder der zweite Zerkleinerungsschritt vorzugsweise in einer Hammermühle durchgeführt wird, und ferner umfassend einen Sortierschritt zwischen dem ersten und dem zweiten Zerkleinerungsschritt, wobei der Sortierschritt so konfiguriert ist, dass er vom Faserzement unterschiedliches Material, beispielsweise ein Polymerband, entfernt, und wobei der Sortierschritt vorzugsweise einen Detektionsschritt mittels Nahinfrarotspektroskopie umfasst.

7. Verfahren nach einem der vorhergehenden Ansprüche, wobei Faserzementabfallmaterial verarbeitet wird, dessen Dichte gemäß EN12467 mindestens 1200 kg/m³ beträgt.

8. Verfahren nach einem der vorhergehenden Ansprüche, wobei Faserzementabfallmaterial verarbeitet wird, das ein luftgehärtetes Zementmaterial mit mindestens 60 Gew.-% Zement oder einen autoklavgehärteten Zement umfasst, der durch Autoklavieren einer Zusammensetzung gewonnen wird, die Siliciumdioxid und mindestens 25 Gew.-% Zement enthält.

9. Eine Anlage zur Aufbereitung von Faserzementabfällen, umfassend:
- eine Vorrichtung zum Zerkleinern von Faserzementabfällen, in denen Fasern in einer ausgehärteten Zementmatrix eingebettet sind;
- eine Mikronisierungsvorrichtung (10), umfassend:
(i) eine Vertikalwalzenmühle in einer Mahlkammer, die so konfiguriert ist, dass sie das zerkleinerte Material als Aufgabematerial verwendet und daraus Agglomerate aus Zementpartikeln und Fasern erzeugt;
(ii) eine Einrichtung zur Erzeugung eines nach oben gerichteten, erwärmten Luftstroms durch die Mahlkammer, wobei dieser erwärmte Luftstrom so konfiguriert ist, dass er die Agglomerate, Fasern und Zementpartikel nach oben transportiert und die Agglomerate trocknet;
(iii) einen oberhalb der Vertikalwalzenmühle in der Mahlkammer angeordneten Windsichter zum Abscheiden einer gröberen Fraktion der Zementpartikel und deren Rückführung in die Mahlkammer zur Vertikalwalzenmühle sowie einen Auslass stromabwärts des Windsichters, durch den eine feinere Fraktion der Zementpartikel und die freigesetzten Fasern hindurchtreten;
- ein Sieb stromabwärts des Auslasses zur Trennung der freigesetzten Fasern von den zementhaltigen Partikeln.

10. Die Anlage nach Anspruch 9, wobei die Vertikalwalzenmühle eine rotierende horizontale Mahlbahn (13) und eine oder mehrere Walzen (12) umfasst, die so konfiguriert sind, dass sie sich um stationäre Drehachsen drehen, während sie gegen die Mahlbahn gepresst werden, sodass das zerkleinerte Material zwischen der Mahlbahn (13) und einer Seitenfläche der Walzen (12) gemahlen wird.

11. Die Vorrichtung nach Anspruch 9 oder 10, wobei das Sieb (20) so konfiguriert ist, dass es die Fasern von den Partikeln des Gemisches trennt, indem es eine Masche (21) mit Öffnungen verwendet, die so ausgelegt sind, dass sie den Durchtritt der meisten Partikel ermöglichen, während sie die meisten Fasern zurückhalten, wobei vorzugsweise das Sieb (21) Öffnungen mit einem Durchmesser zwischen 60 µm und 200 µm oder zwischen 50 µm und 150 µm aufweist.

12. Die Vorrichtung nach den Ansprüchen 9-11, wobei die Mittel zur Erzeugung des Luftstroms Lufteinlässe an der Unterseite der Mahlkammer umfassen, um den genannten nach oben gerichteten Luftstrom zu erzeugen.

13. Die Anlage nach einem der Ansprüche 9 bis 12, wobei die Mikronisierungsvorrichtung einen ersten und einen zweiten Auslass aufweist und ferner eine Verdrängungseinrichtung zum Verdrängen von Feststoffmaterial von der Vertikalwalzenmühle zum zweiten Auslass aufweist, wobei der erste Auslass vorzugsweise tiefer als der zweite Auslass und tiefer als die Vertikalwalzenmühle angeordnet und zur Entfernung von Zuschlagstoffen konfiguriert ist.

14. Die Anlage nach Anspruch 13, wobei die Mikronisierungsvorrichtung einen ersten und einen zweiten Zustand aufweist, wobei die Einstellungen der Vertikalwalzenmühle im ersten Zustand von denen im zweiten Zustand verschieden sind und die Vertikalwalzenmühle im ersten Zustand zum Mahlen von Beton oder dessen zerkleinertem Material und im zweiten Zustand zum Mahlen von zerkleinertem Material aus Faserzementabfällen zu Agglomeraten aus Fasern und Zementpartikeln konfiguriert ist.

15. Verwendung der Anlage nach einem der Ansprüche 13 oder 14 zur getrennten Verarbeitung einer ersten und einer zweiten Charge Abfallmaterial, wobei es sich bei der ersten Charge um Betonabfall und bei der zweiten Charge um Faserzementabfall handelt.

## Revendications

1. Procédé de transformation de déchets de fibrociment en poudre cimentaire, cette poudre présentant de préférence une granulométrie telle qu'au moins 90 % en poids (d90) soit inférieure à 100 µm, la médiane (d50) étant comprise entre 10 et 40 µm, plus particulièrement entre 15 et 35 µm, et idéalement entre 20 et 30 µm. Ce procédé comprend les étapes suivantes :
- introduction de matériau broyé issu de déchets de fibrociment dans un appareil de micronisation (10) comprenant :
- un broyeur à rouleaux vertical dans une chambre de broyage ;
- un dispositif de génération d'un flux d'air chaud ascendant à travers la chambre de broyage ;
- un classificateur d'air disposé au-dessus du broyeur à rouleaux vertical dans la chambre de broyage ; et
- une sortie en aval du classificateur d'air.
- broyer le matériau concassé dans le broyeur à cylindres verticaux afin de le désagréger et de réduire ainsi la taille d'au moins une partie de celui-ci sans réduire proportionnellement la taille des fibres qui y sont incorporées, ce qui permet d'obtenir des agglomérats de fibres et de particules cimentaires,
- retirer le matériau du broyeur à cylindres verticaux et sécher ces agglomérats de fibres et de particules cimentaires au moyen d'un flux d'air chaud ascendant, les fibres et/ou les particules cimentaires étant libérées des agglomérats lors dudit flux d'air ascendant et/ou de tout impact ultérieur dans la chambre de broyage;
- séparation dans le classificateur à air (14) des particules cimentaires en une fraction de particules plus grosses et une fraction de particules plus petites, les particules plus grosses étant réintroduites dans la chambre de broyage du broyeur à rouleaux vertical, tandis qu'un mélange desdites particules plus petites et de fibres libérées est éjecté par la sortie (16),
- séparation dudit mélange éjecté pour séparer au moins une partie des fibres libérées des particules cimentaires au moyen d'un tamis, obtenant ainsi ladite poudre cimentaire.

2. Procédé selon la revendication 1, dans lequel ladite étape de broyage est réalisée par compression du matériau broyé.

3. Procédé selon la revendication 1 ou 2, dans lequel le classificateur d'air est réglé pour avoir un point de classification dans la plage de 75 à 125 µm, de préférence de 90 à 110 µm, et dans lequel le broyeur à rouleaux vertical est réglé pour avoir une taille de broyage dans la plage de 75 à 125 µm.

4. Procédé selon l'une quelconque des revendications 1 à 2, dans lequel ladite séparation dudit mélange éjecté est effectuée par tamisage à l'aide d'un tamis dont la maille est d'au plus 150 micromètres, de préférence d'au plus 125 micromètres, et de préférence en outre d'au moins 50 micromètres, plus particulièrement d'au moins 75 micromètres.

5. Procédé selon l'une quelconque des revendications précédentes, dans lequel la chambre de broyage est de préférence chauffée à une température comprise entre 70°C et 90°C au moyen dudit flux d'air chaud.

6. Procédé selon l'une quelconque des revendications précédentes, dans lequel ledit matériau concassé est obtenu à partir de déchets de fibrociment au moyen d'une première et d'une seconde étape de réduction de taille, ladite première étape de réduction de taille produisant un matériau aggloméré et ladite seconde étape de réduction de taille désagrégeant ledit matériau aggloméré en matériau concassé, de préférence la première étape de réduction de taille étant réalisée par broyage et/ou de préférence la seconde étape de réduction de taille étant réalisée dans un broyeur à marteaux, et comprenant en outre une étape de tri entre la première et la seconde étape de réduction de taille, ladite étape de tri étant configurée pour éliminer les matériaux autres que le fibrociment, par exemple un ruban polymère, et ladite étape de tri comprenant de préférence une étape de détection utilisant la spectroscopie proche infrarouge.

7. Procédé selon l'une quelconque des revendications précédentes, dans lequel un matériau de déchet de fibrociment est traité et a une densité d'au moins 1200 kg/m3 mesurée selon la norme EN12467.

8. Procédé selon l'une quelconque des revendications précédentes, dans lequel un matériau de déchet de fibrociment est traité qui comprend un matériau de ciment durci à l'air avec au moins 60 % en poids de ciment ou un ciment durci en autoclave obtenu par durcissement en autoclave d'une composition comprenant de la silice et au moins 25 % en poids de ciment.

9. Installation de traitement de déchets de fibrociment, comprenant :
- un appareil de broyage de déchets de fibrociment dans lequel les fibres sont enrobées dans une matrice de ciment durci, afin d'obtenir un matériau broyé ;
- un appareil de micronisation (10) comprenant :
(i) un broyeur à cylindres vertical dans une chambre de broyage, configuré pour utiliser ledit matériau broyé comme alimentation et générer des agglomérats de particules cimentaires et de fibres à partir dudit matériau broyé ;
(ii) un moyen de générer un flux d'air chaud ascendant à travers la chambre de broyage, ledit flux d'air chaud étant configuré pour transporter lesdits agglomérats, fibres lesdites particules cimentaires vers le haut et pour sécher lesdits agglomérats ;
(iii) un classificateur à air disposé au-dessus dudit broyeur à cylindres vertical dans ladite chambre de broyage, pour séparer la fraction la plus grossière desdites particules cimentaires et la renvoyer dans la chambre de broyage vers ledit broyeur à cylindres vertical, et une sortie en aval dudit classificateur à air, par laquelle doit passer la fraction la plus fine desdites particules cimentaires et les fibres libérées ;
- un tamis en aval de ladite sortie pour séparer lesdites fibres libérées desdites particules cimentaires.

10. L'installation selon la revendication 9, dans laquelle ledit broyeur à rouleaux verticaux comprend une piste de broyage horizontale rotative (13), un ou plusieurs rouleaux (12) configurés pour tourner autour d'axes de rotation fixes tout en étant pressés contre la piste de broyage, de sorte que le matériau concassé est broyé entre la piste de broyage (13) et une surface latérale des rouleaux (12),

11. L'installation selon la revendication 9 ou 10, dans laquelle le tamis (20) est configuré pour séparer les fibres des particules dudit mélange en utilisant une maille (21) dont les ouvertures sont configurées pour permettre le passage d'une majorité de particules tout en retenant une majorité de fibres, dans laquelle de préférence la maille (21) a des ouvertures dont le diamètre est compris entre 60 µm et 200 µm ou entre 50 µm et 150 µm.

12. L'installation selon les revendications 9 à 11, dans laquelle les moyens de génération du flux d'air comprennent des entrées d'air sur le côté inférieur de la chambre de broyage, pour créer ledit flux d'air ascendant.

13. L'installation selon l'une quelconque des revendications 9 à 12, dans laquelle l'appareil de micronisation comprend une première sortie et une deuxième sortie, et comprend en outre un moyen de déplacement pour le déplacement de matière solide du broyeur à rouleaux vertical vers la deuxième sortie, dans lequel de préférence la première sortie est disposée à un niveau inférieur à celui de la deuxième sortie et à un niveau inférieur à celui du broyeur à rouleaux vertical, et est configurée pour l'élimination des agrégats.

14. L'installation selon la revendication 13, dans laquelle l'appareil de micronisation est configuré pour avoir un premier état et un deuxième état, dans lequel les réglages du broyeur à rouleaux vertical du premier état sont différents de ceux du deuxième état, et dans lequel le broyeur à rouleaux vertical du premier état est configuré pour broyer du béton ou des matériaux concassés de celui-ci et dans lequel le broyeur à rouleaux vertical du deuxième état est configuré pour broyer des matériaux concassés provenant de déchets de fibrociment en agglomérats de fibres et de particules cimentaires.

15. Utilisation de l'installation selon l'une quelconque des revendications 13-14 pour le traitement séparé d'un premier lot et d'un deuxième lot de déchets, le premier lot étant un déchet de béton et le deuxième un déchet de fibrociment.
